# EUROPÄISCHE PATENTSCHRIFT

(11) **EP 2 619 883 B1**
(45) Veröffentlichungstag und Bekanntmachung des Hinweises auf die Patenterteilung: **20.05.2015**
(21) Anmeldenummer: 11761547.6
(22) Anmeldetag: 19.09.2011
(51) Int. Cl.: H02K 1/27, H02K 29/03

(54) **MASCHINENKOMPONENTE FÜR EINE ELEKTRISCHE MASCHINE**
MACHINE COMPONENT FOR AN ELECTRICAL MACHINE
ÉLÉMENT POUR UNE MACHINE ÉLECTRIQUE

(30) Priorität: 20.09.2010 DE 102010041015
(43) Veröffentlichungstag der Anmeldung: 31.07.2013
(73) Patentinhaber: Robert Bosch GmbH, 70442 Stuttgart (DE)
(72) Erfinder: ROTH, Karl-Juergen, 71701 Schwieberdingen (DE); HOLZWARTH, Bruno, 71701 Schwieberdingen (DE)
(86) Internationale Anmeldenummer: PCT/EP2011/066234
(87) Internationale Veröffentlichungsnummer: WO 2012/038377

(56) Entgegenhaltungen:
- EP-A1- 1 542 335
- WO-A1-2010/070900
- DE-A1- 19 915 664
- GB-A- 2 158 653
- JP-A- 2000 175 389
- JP-A- 2003 023 740

## Beschreibung

### Technisches Gebiet

Die vorliegende Erfindung betrifft eine Maschinenkomponente für eine elektrische Maschine, insbesondere einen Rotor für eine rotatorische elektrische Maschine, mit einer optimierten Polkontur der Rotorpole.

### Stand der Technik

Als elektrische Maschinen sind beispielsweise Elektromotoren oder Generatoren bekannt, bei denen der Läufer oder der Stator zur Erzeugung eines elektromagnetischen Feldes mit zumindest einem Permanentmagneten ausgestattet ist. Bei bestimmten Topologien von Läufern werden die Permanentmagnete in Taschen in den Läuferkörper eingesetzt, so dass ein Läufer mit vergrabenen Permanentmagneten gebildet wird.

Ein allgemeines Beispiel für eine elektrische Maschine ist aus der Druckschrift DE 10 2008 042 976 A1 bekannt. Die elektrische Maschine entspricht einem Elektromotor mit einem als Rotor ausgebildeten Läufer und einem Stator. An dem Stator befinden sich mehrere Statorwicklungen und der Rotor ist auf einer Welle des Elektromotors fest angebracht. Zum Betreiben der elektrischen Maschine werden die Statorwicklungen auf den Ankern des Stators mittels eines Steuerschaltkreises so gesteuert, dass sich ein rotierendes Drehmagnetfeld im Bereich des Rotors ergibt. Der Rotor ist mit Permanentmagneten versehen, um ein Erregermagnetfeld zu erzeugen. Das bereitgestellte Erregermagnetfeld wechselwirkt mit dem durch die Statorwicklungen des Stators bewirkten Drehmagnetfeld, so dass ein Antriebsmoment auf den Rotor ausgeübt wird. Die Permanentmagneten sind in Taschen vergraben angeordnet, so dass der Rotor einen zylindrischen Außenmantel aufweist. Im gezeigten Beispiel sind vier Rotorpole vorgesehen, wobei die Permanentmagnete mit ihren Polenden so angeordnet sind, dass sie in Richtung der Statorenden weisen.

Eine solche Rotortopologie mit einer insgesamt kreiszylindrischen Außenfläche führt zu einem nicht optimalen sinusförmigen Verlauf der magnetischen Feldstärke. Dadurch kommt es zu einer Bildung von hohen Rastmomenten im unbestromten Zustand bzw. zu hohen Drehmomentwelligkeiten im Betrieb, was je nach Anwendungsfall unerwünscht ist. Insbesondere verschlechtern die Rastmomente bzw. die Drehmomentwelligkeiten das Rundlaufverhalten der elektrischen Maschine und häufig auch deren Regelungsverhalten. Wenn die elektrische Maschine nur ein geringes Rastmoment und/oder eine geringe Drehmomentwelligkeit aufweisen soll, ist daher z.B. aus DE 10 2008 041 660 A1 bekannt, die Rotorpole des Rotors als Sinuspole auszubilden und dazu beispielsweise eine so genannte Richterkontur vorzusehen.

Selbst bei elektrischen Maschinen, deren Rotorpole eine Außenkontur aufweisen, die entsprechend einem Sinuspol ausgebildet ist, d. h. die magnetische Feldstärke weist entlang der Umfangsrichtung einen verbesserten sinusförmigen Verlauf auf, sind die Rastmomente einer derartigen elektrischen Maschine nicht vernachlässigbar. Die Rastmomente werden durch das Zusammenspiel aller Rotorpole und deren Abstände zu den jeweiligen Statorzähnen beeinflusst. Zur Reduzierung des Rastmoments kann, wie beispielsweise in der Druckschrift DE 10 2004 030 111 A1 beschrieben, eine Schränkung, insbesondere eine Pseudoschränkung, im Rotor vorgesehen sein, bei der der Rotor aus mehreren Teilpaketen zusammengebaut wird, wobei die Pakete tangential leicht zueinander versetzt, d.h. verdreht, sind. Der Versatz beträgt in der Regel nur einen geringen Anteil der Breite des Pols in radialer Richtung. Die Pseudoschränkung wird in der Regel mit mehrteiligen Permanentmagneten ausgeführt, die in jeweiligen Taschen der Teilpakete angeordnet sind. Dadurch ist der Aufbau eines solchen Rotors sehr aufwändig.

Alternativ werden auch elektrische Maschinen vorgeschlagen, bei denen zur Reduzierung des Rastmoments und/oder der Drehmomentwelligkeit zwischen den Rotorpol Kerben angeordnet ist, die den Luftspalt lokal vergrößert. Dies ist beispielsweise mit flach angeordneten Permanentmagneten aus der Druckschrift DE 199 33 009 A1 und am Beispiel eines Speichenrotors aus der Druckschrift DE 697 03 136 T2 bekannt.

Weiterhin können, wie es beispielsweise aus DE 20 2004 016 534 U1, WO 2004/021 551 A2 oder US 2004/0041 484 A1 bekannt ist, auch in der Magnettasche des Rotorkörpers zwischen dem Permanentmagneten und dem Rotorkörper in Richtung der Polenden eine Kerbe, eine Ausnehmung bzw. eine Zone reduzierter magnetischer Leitfähigkeit vorgesehen sein, um die Eigenschaften der Maschine hinsichtlich Rastmomente und Drehmomentenwelligkeit zu formen.

Aus WO 2010/070 900 A1, JP 2003 023 740 und JP 2000 175 389 sind weitere elektrische Maschinen mit Merkmalen zur Reduzierung der Drehmomentwelligkeit bekannte.

Es ist daher Aufgabe der vorliegenden Erfindung, eine Maschinenkomponente für eine elektrische Maschine sowie eine elektrische Maschine zur Verfügung zu stellen, bei denen die Rastmomente und die Drehmomentwelligkeit reduziert sind und die in besonders einfacher Weise aufgebaut werden können.

### Offenbarung der Erfindung

Diese Aufgabe wird durch die Maschinenkomponente gemäß Anspruch 1 sowie durch die elektrische Maschine gemäß dem nebengeordneten Anspruch gelöst.

Weitere vorteilhafte Ausgestaltungen sind in den abhängigen Ansprüchen angegeben.

Gemäß einem ersten Aspekt ist eine Maschinenkomponente, insbesondere ein Rotor, zum Aufbau einer elektrischen Maschine vorgesehen. Die Maschinenkomponente ist im Wesentlichen kreiszylindrisch und weist Pole auf, an denen jeweils ein von mindestens einem Permanentmagneten gebildetes Magnetfeld austritt, wobei die Pole jeweils mit einer Polkontur versehen sind, die von einer rein kreiszylindrischen Mantelfläche der Maschinenkomponente abweicht. Die Polkonturen der Pole weisen über die Länge der Maschinenkomponente in axialer Richtung jeweils mehrere Abschnitte auf, die in Umfangsrichtung versetzt sind. Der mindestens eine Permanentmagnet ist im Wesentlichen stabförmig, insbesondere quaderförmig ausgebildet und erstreckt sich über einen Übergang zwischen zwei der mehreren Abschnitte.

Eine Idee der obigen Maschinenkomponente besteht darin, einen konturierten Pol der Maschinenkomponente in axialer Richtung mehrteilig auszubilden. Die Maschinenkomponente umfasst mindestens einen vergrabenen Permanentmagneten, wobei der an dem Permanentmagneten angeordnete Rotorpol in mehrere Abschnitte unterteilt ist. Die Abschnitte unterscheiden sich dadurch, dass lediglich die Polkontur bezüglich einer Umfangsrichtung versetzt ist. Dadurch kann erreicht werden, dass durch Verwendung eines durchgängigen bzw. einstückigen Permanentmagneten in der Maschinenkomponente die Maschinenkomponente einerseits besonders einfach aufgebaut werden kann und andererseits das Rastmoment und die Drehmomentwelligkeit einer mit einer derartigen Maschinenkomponente aufgebauten elektrischen Maschine deutlich verbessert werden können.

Weiterhin kann der Permanentmagnet in einer Tasche angeordnet sein, die sich über einen Übergang zwischen mindestens zwei der mehreren Abschnitte erstreckt und keine Stufung aufweist.

Gemäß einer Ausführungsform kann der mindestens eine Permanentmagnet so angeordnet sein, dass dessen Polrichtung in radialer oder tangentialer Richtung verläuft.

Erfindungsgemäß entspricht die Polkontur einer Sinuspolkontur, z.B. einer Richterkontur, wobei die Polkontur nicht klappsymmetrisch in der Umfangsrichtung, insbesondere mit einer einseitigen Stufung oder Schrägung, ausgebildet ist.

Weiterhin kann die Polkontur einem zumindest einseitig von einer Vertiefung begrenzten mantelsegmentförmigen Bereich entsprechen.

Gemäß einer Ausführungsform kann zwischen zwei benachbarten Polkonturen ein Luftspalt vorgesehen sein, der eine Breite in Umfangsrichtung aufweist, die gleich oder größer ist als der größte vorkommende Versatz zwischen zwei einem bestimmten Pol zugeordneten Polkonturen.

Es kann vorgesehen sein, dass die Maschinenkomponente mit Blechlamellen aufgebaut ist, deren Bereiche, die die Polkonturen bilden, zu einer Mittenachse des Pols in Umfangsrichtung versetzt sind, wobei der bzw. die den mindestens einen Permanentmagneten tragenden Bereiche symmetrisch zu der Mittenachse angeordnet ist/sind, wobei mindestens zwei durch Stapeln der Blechlamellen aufgebaute Komponententeile vorgesehen sind, die spiegelbildlich aufeinander aufgesetzt sind, so dass sich der mindestens eine Permanentmagnet über einen Übergang zwischen den zwei Komponententeilen erstreckt.

Weiterhin können benachbarte Pole über voneinander beabstandete Stege miteinander verbunden sein.

Gemäß einem weiteren Aspekt ist eine elektrische Maschine mit der obigen Maschinenkomponente vorgesehen.

### Kurzbeschreibung der Zeichnungen

Es zeigen:
- Figur 1: eine Querschnittsdarstellung durch einen permanentmagneterregten Synchronmotor mit einem Innenläufer;
- Figuren 2a bis 2c: Ansichten eines Rotors zum Einsatz in eine Synchronmaschine der Figur 1, bei der die Rotorpole eine Pseudoschränkung aufweisen, wobei die Polkontur einem Sinuspol entspricht, der zur Mittenachse der Tasche, die in radialer Richtung verläuft, versetzt angeordnet ist;
- Figuren 3a bis 3c: Ansichten eines Rotors mit Permanentmagneten in Speichenanordnung;
- Figuren 4a und 4b: Ansichten eines Rotors mit drei Abschnitten der Rotorpole in axialer Richtung, wobei die Polkonturen in Umfangsrichtung zueinander versetzt sind;
- Figuren 5a und 5b: Ansichten eines Rotors, bei dem die Polkonturen lediglich in einer Vertiefung zwischen benachbarten Rotorpolen bestehen; und
- Figuren 6a und 6b: Ansichten einer erfindungsgemäßen Ausführungsform eines Rotors mit asymmetrischen Rotorpolen, wobei insbesondere der Auslauf der Rotorpole zu einem Ende des Rotorpols hin eine Stufung oder eine Schrägung aufweist;
- Figuren 7a bis 7d: Ansichten eines Rotors mit asymmetrischen Rotorpolen, wobei die Rotorpole durch Stege miteinander verbunden sind; und
- Figuren 8a bis 8d: Ansichten einer weiteren erfindungsgemäßen Ausführungsform eines Rotors mit Rotorpolen mit Sinuskonturen, wobei die Sinuskonturen mit unterschiedlichen Abständen von den Ausnehmungen beabstandet sind.

### Beschreibung von Ausführungsformen

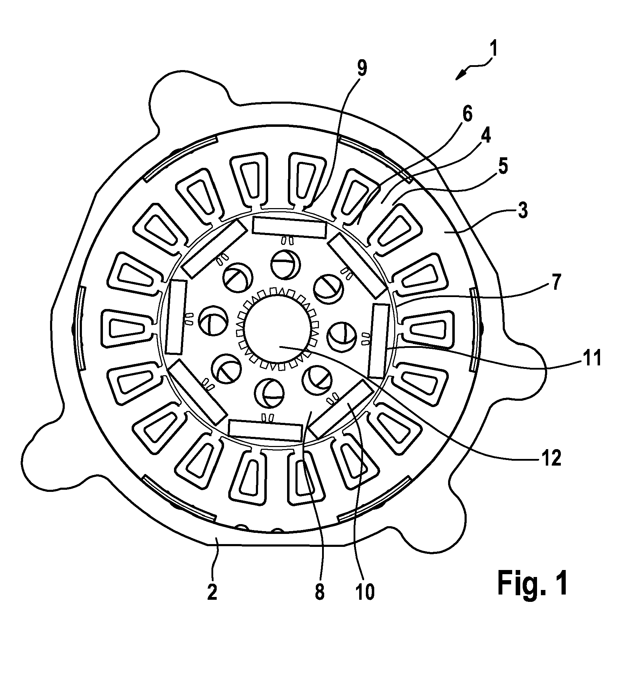

In Figur 1 ist eine schematische Querschnittsdarstellung durch eine herkömmliche elektrische Maschine dargestellt. Die elektrische Maschine 1 ist im dargestellten Beispiel als rotatorischer Innenläufermotor ausgebildet und umfasst einen Statorring 2, in dem ein Stator 3 angeordnet ist. Der Stator 3 ist kreiszylinderförmig ausgebildet und weist in seinem Innenraum nach innen gerichtete Statorzähne 4 auf.

Jeder Statorzahn 4 ist in radialer Richtung nach innen gerichtet und ist mit einem Statorschaft 5 und einem Statorzahnkopf 6 ausgebildet. Die Statorzähne 4 sind jeweils von einer oder mehreren Statorwicklungen umwickelt, die je nach Phasenzahl der Synchronmaschine miteinander verschaltet sein können.

Der Stator 3 definiert eine Innenausnehmung 7, in der ein Rotor 8 um eine Welle 12, die um eine Drehachse angeordnet ist, drehbeweglich angeordnet ist. Der Rotor 8 umfasst eine gerade Anzahl von Rotorpolen, an denen jeweils ein elektrisches Erregermagnetfeld nach außen austritt und mit einem aus den Statorzähnen 4 austretenden Statormagnetfeld wechselwirkt, das durch eine Bestromung der Statorwicklung erzeugt wird. Die Wechselwirkung des Statormagnetfelds und des Erregermagnetfelds des Rotors führt (im Motorbetrieb) zu einem Antriebsmoment, das auf den Rotor 8 wirkt und ein Drehmoment auf der Welle 12 bereitstellt.

Zur Erzeugung des Erregermagnetfelds weist der Rotor 8 Permanentmagnete 10 auf, die in Taschen 11 angeordnet sind. Die Taschen 11 sind in der Regel quaderförmig ausgebildet, so dass die in der Regel ebenfalls quaderförmigen oder stabförmigen Permanentmagnete 10 in einfacher Weise in die Taschen 11 eingesetzt werden können.

Sowohl der Stator 3 als auch der Rotor 8 können grundsätzlich aus Vollmaterial (monolithisch) oder aus Lamellenblechen aus gestanztem Elektroblech zusammengesetzt sein. Vorzugsweise sind der Stator 3 und der Rotor 8 üblicherweise als Lamellenpakete aus einzelnen gegeneinander elektrisch isolierten Blechlamellen zusammengesetzt, die gestapelt werden, so dass diese im Wesentlichen deckungsgleich übereinander liegen. Das heißt für den Stator 3 sind die Blechlamellen so aufeinander angeordnet, dass die Blechstrukturen, die die Statorzähne 4 ausbilden, in axialer Richtung übereinander zu liegen kommen, so dass deren Kanten in axialer Richtung, d.h. parallel zur Drehachse der Welle 12 verlaufen. In entsprechender Weise sind die Blechlamellen für das Lamellenpaket, das den Rotor 8 bildet, so aufeinander angeordnet, dass Taschenausnehmungen in den Blechlamellen, die die Taschen 11 bilden, in axialer Richtung übereinander zu liegen kommen.

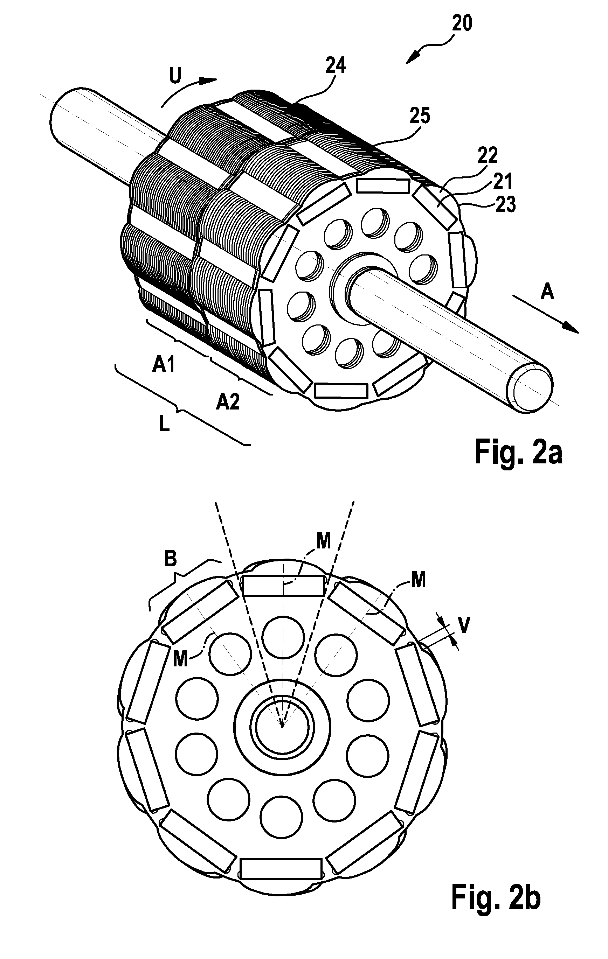

In den Figuren 2a bis 2c sind verschiedene Ansichten einer möglichen Ausführung eines Rotors 20 dargestellt, der in der Synchronmaschine 1 verwendet werden kann. Der Rotor 20 weist ähnlich dem Rotor 8, der in Figur 1 dargestellt ist, in axialer Richtung durchgehende Taschen 21 auf, um im Wesentlichen quaderförmige Permanentmagnete einzusetzen, die sich jeweils über die gesamte axiale Länge des Rotors 20 erstrecken.

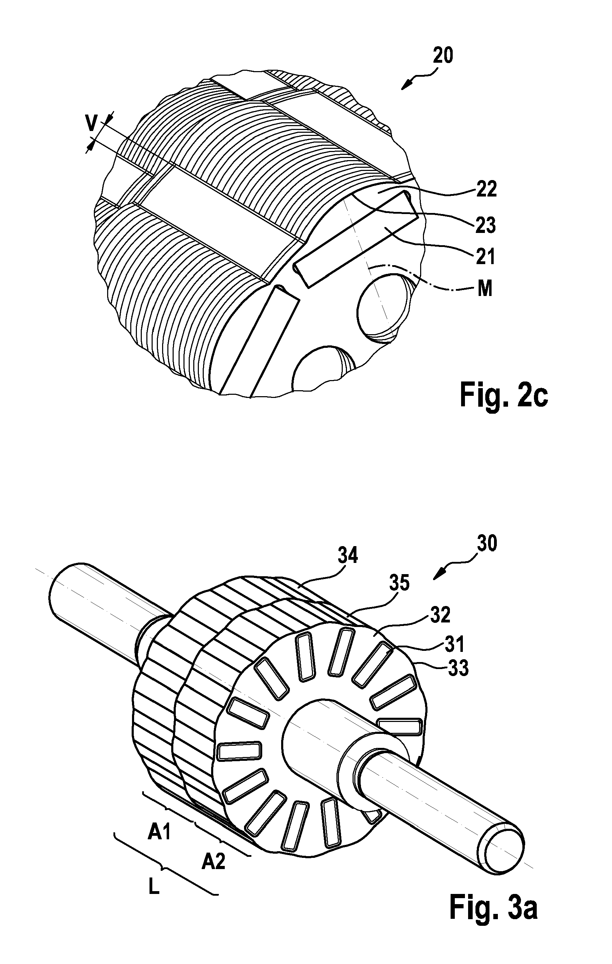

Die Taschen 21 bilden Rotorpole 22 aus, die eine tangentiale Breite B und eine axiale Länge L aufweisen. Die Rotorpole 22 sind bei der Ausführung der Fig. 2 jeweils in Rotorteile 24, 25 in zwei Abschnitten A1, A2 unterteilt, in denen der jeweilige Rotorpol 22 eine Polkontur 23 aufweist. Beispielsweise entspricht die Polkontur einer Sinuspolkontur, wie beispielsweise einer Richterkontur. Die Sinuspolkontur ist eine Gestaltung der Außenfläche des Rotorpols 22, die im Wesentlichen einen bezüglich einer Umfangsrichtung U sinusförmigen Verlauf der Feldstärke des Erregermagnetfelds in Richtung der Statorzähne bewirkt. Die Polkontur ist einfach herstellbar und kann bei Verwendung von Lamellenblechen mittels Stanzen hergestellt werden und die Polkontur muss dann in den meisten Fällen nach dem Stanzen nicht mehr nachbearbeitet werden.

Während bei herkömmlichen elektrischen Maschinen der Rotorpol 22 mittig in radialer Richtung außerhalb der Tasche 21 bzw. des Permanentmagneten angeordnet ist, ist nun vorgesehen, dass die Sinuspolkontur in Richtung einer relativen Bewegung des Rotors 20 bezüglich eines Stators, d.h. in Umfangsrichtung U, versetzt ist. Im vorliegenden Fall ist die Sinuspolkontur der Rotorpole 22 in dem ersten Abschnitt A1 in einer ersten Umfangsrichtung bezüglich einer radial verlaufenden Mittenachse M der Permanentmagneten bzw. der Taschen 21 und in dem ersten Abschnitt A2 in einer zweiten, dazu entgegengesetzten Umfangsrichtung, versetzt. Dies führt im Wesentlichen zu zwei Rotorteilen 24, 25, deren sinuspolförmige Polkonturen zueinander versetzt angeordnet sind.

Während im Stand der Technik dazu jedoch auch zueinander versetzte Taschen vorgesehen sind, so dass die entsprechende Polkontur der einzelnen Teilrotoren mittig über den jeweiligen Taschen bzw. Taschenabschnitten angeordnet ist, ist bei dem Rotor 20 der Figuren 2a bis 2c eine einzige durchgehende Tasche 21 vorgesehen, in die ein durchgängiger, im Wesentlichen quaderförmiger Permanentmagnet bzw. ein Permanentmagnet mit im Wesentlichen rechteckigem Querschnitt eingesetzt werden kann. Insbesondere in der Figur 2b erkennt man deutlich, dass die Polkonturen 23 bezüglich der Mittenlinie M der einzelnen Rotorpole 22 in Umfangsrichtung U zueinander versetzt sind.

Die Länge der Permanentmagnete entspricht vorzugsweise der Gesamtlänge der Teilpakete. Hierdurch ergibt sich der Vorteil, dass sich die Permanentmagnete jeweils über die gesamte Rotorlänge (die Gesamtlänge aller Abschnitte hinweg) erstrecken können und somit die Anzahl der Permanentmagnete reduziert wird und dadurch der Teilepreis und der Montageaufwand reduziert sind. Zu dem Vorteil der vereinfachten Montage kommt hinzu, dass sich die Toleranzkette der Länge des Permanentmagneten reduziert. Eine geringere Toleranz der Länge bewirkt eine weitere Verbesserung der Motoreigenschaften. Möglich ist aber auch, dass die Permanentmagnete kürzer sind als die Gesamtlänge aller Abschnitte A1, A2, dass sich also der Permanentmagnet über die Gesamtlänge aller Abschnitte A1, A2 hinweg aus mehreren Teilstücken zusammensetzt. Dies kann von Fall zu Fall kostengünstiger sein.

Damit benachbarte Polkonturen 23 sich nicht überlappen, ist vorzugsweise vorzusehen, dass die Polkonturen in Umfangsrichtung eine geringere Breite (bezüglich des abgedeckten Winkelbereichs) aufweisen als der von den Taschen 21 bzw. den darin befindlichen Permanentmagneten überstrichene Winkelbereich. Mit anderen Worten sollte die Breite B der Polkonturen 23 (in Winkelgrad) in Umfangsrichtung gleich oder weniger als 360°/n - V betragen, wobei n der Anzahl der Rotorpole und V dem Versatzwinkel, um den die Abschnitte der Rotorpole 23 zueinander in Umfangsrichtung versetzt sind, entsprechen.

Vorzugsweise ist der Versatz V der Polkontur 23 bezüglich der Mittenachse des Rotorpols 22 um einen identischen Winkel in die zueinander entgegengesetzten Umfangsrichtungen U vorgesehen. Der identische Winkel entspricht dann V/2. Dadurch ist es möglich, beide Abschnitte A1, A2 des Rotors 20 aus identischen Blechpaketen aufzubauen, die spiegelbildlich zueinander montiert werden, wodurch sich ein Versatz des Sinuspols in einem der Abschnitte um den Winkel V/2 in die erste Umfangsrichtung und um den Winkel V/2 in dem zweiten Abschnitt in die zweite Umfangsrichtung ergibt.

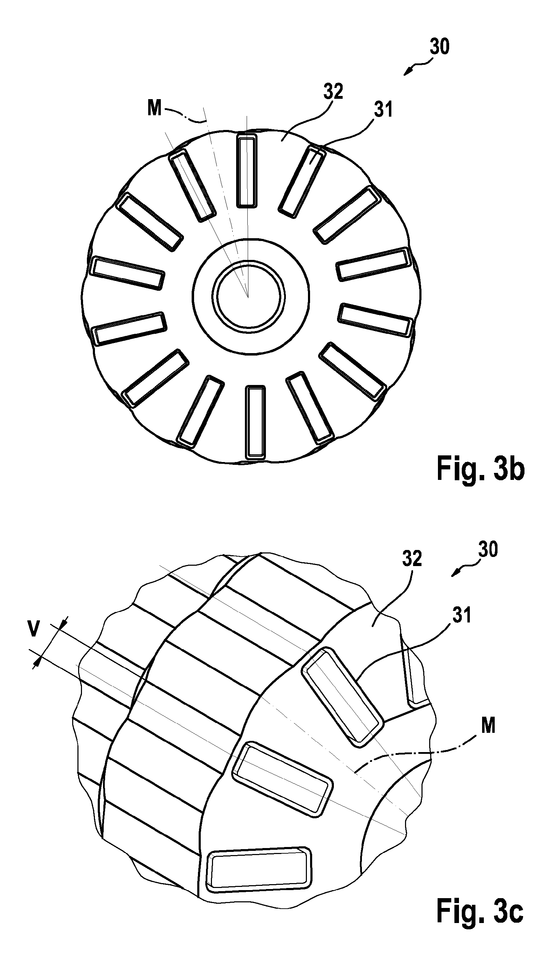

In den Figuren 3a bis 3c sind verschiedene Ansichten einer weiteren Ausführungsform eines Rotors 30 dargestellt, der in einer Synchronmaschine 1 der Figur 1 eingesetzt werden kann. Im Wesentlichen ähnelt der Rotor 30 der Figuren 3a bis 3c dem Rotor 20 der Figuren 2a bis 2c, mit dem Unterschied, dass anstatt radial ausgerichteter Permanentmagnete in den Taschen 21 die Permanentmagnete in gemäß einer Speichenanordnung angeordneten Taschen 31 angeordnet sind, deren Polrichtung im Wesentlichen in tangentialer Richtung verläuft.

Rotorpole 32 des Rotors 30 werden zwischen den speichenförmig angeordneten Taschen 31 gebildet und die Taschen 31 erstrecken sich, wie bei der Ausführungsform der Figuren 2a bis 2c, in axialer Richtung über die gesamte Länge L des Rotors 30, so dass ein im Wesentlichen quaderförmiger Permanentmagnet bzw. ein Permanentmagnet mit im Wesentlichen rechteckigem Querschnitt eingesetzt werden kann. Die Rotorpole 32 weisen, wie zuvor beschrieben, Polkonturen 33 auf. Auch bei dieser Ausführungsform können Rotorteile 34, 35 aus Blechpaketen gebildet sein, wobei die beiden Rotorteile 34, 35 die einzelnen Abschnitte A1, A2 des Rotors 30 bilden. Die Rotorteile 34, 35 können aus identischen Blechschnitten aufgebaut sein, wobei die beiden Blechpakte zueinander spiegelbildlich aufeinander angeordnet sind, so dass die Taschen 31 deckungsgleich übereinander liegen. Auf diese Weise weisen die Innenflächen der Taschen 31 keine Stufungen auf.

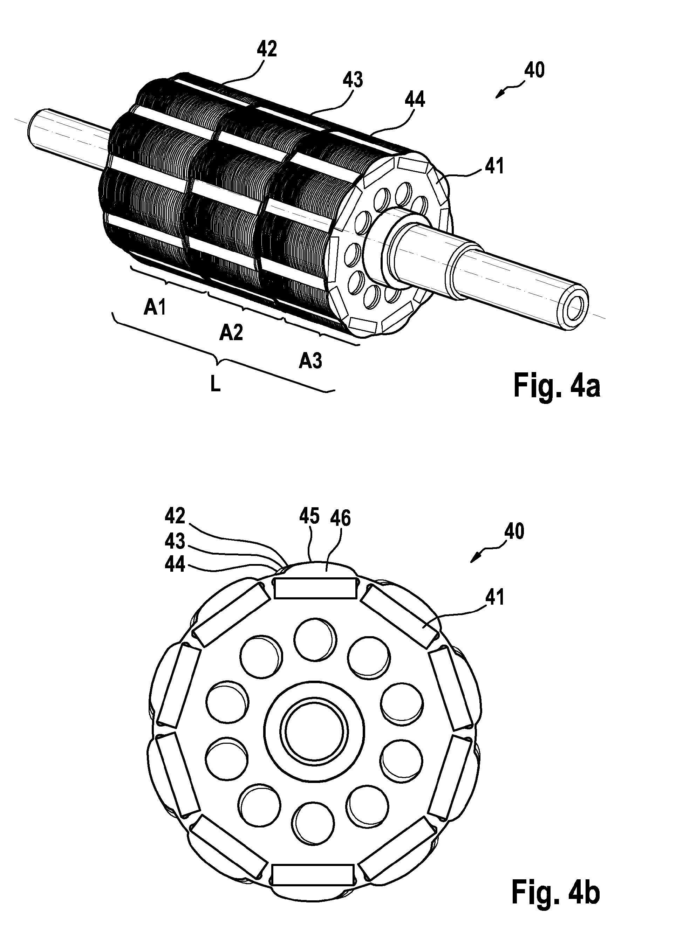

In den Figuren 4a und 4b sind verschiedene Ansichten einer weiteren Ausführungsform eines Rotors 30 dargestellt, der in einer Synchronmaschine 1 der Figur 1 eingesetzt werden kann. Im Wesentlichen ähnelt der Rotor 40 der Figuren 4a und 4b dem Rotor 20 der Figuren 2a bis 2c, mit dem einzigen Unterschied, dass der Rotor 40 statt aus zwei Rotorteilen aus drei Rotorteilen 42, 43, 44 aufgebaut ist, die in den Abschnitten A1, A2, A3 angeordnet sind. Der Rotor 40 weist Pole 46 mit jeweiligen Polkonturen 45 auf.

Durch die dreigeteilte Ausführung des Rotors 40 können die Rastmomente und/oder die Drehmomentwelligkeit weiter reduziert werden. Dann ist der Versatz der Polkontur 45 des ersten Rotorteils 42 in tangentialer Richtung sinnvollerweise von der Mitte des in der Tasche 41 angeordneten Permanentmagneten in einer ersten Umfangsrichtung versetzt, beim zweiten Rotorteil 43 sitzt die Polkontur bevorzugt zentrisch zur Mitte der Tasche 41 und beim dritten Rotorteil 44 sitzt die Polkontor bevorzugt in Richtung der zweiten Umfangsrichtung bezüglich der Mittenachse der Tasche 41. Die Reihenfolge der Anordnung der Rotorteile 42, 43, 44 ist jedoch im Wesentlichen beliebig.

Je nach den Anforderungen an die Rastmomente und/oder die Drehmomentwelligkeit kann es erforderlich sein, dass der Rotor aus mehr als drei Rotorteilen aufgebaut ist, beispielsweise aus vier oder fünf Rotorteilen. Ist er aus drei oder mehr Rotorteilen aufgebaut, dann sind der Versatz der Polkontur des ersten Teilpakets sinnvollerweise in tangentialer Richtung in Richtung der ersten Umfangsrichtung und der Versatz des letzten Rotorteils in der zweiten Umfangsrichtung von der Mitte des Magneten versetzt angeordnet, wobei die beiden Versätze im Wesentlichen dem gleichen Winkelbereich V/2 entsprechen. Bei den verbleibenden Rotorteilen ist der Versatz der Pakete sinnvollerweise gleichmäßig zwischen dem Versatz des ersten und des letzten Rotorteils verteilt. Die Reihenfolge der Anordnung der Rotorteile ist auch hier im Wesentlichen beliebig.

Der ideale Verlauf der Polkontur zum Bilden eines Sinuspols oder dergleichen, der Versatz der Polkontur zur Mittellinie des Rotorpols und der Auslauf bzw. der Übergang zu einem zylindrischen oder näherungsweise zylindrischen Verlauf werden idealerweise mithilfe von Auslegungstools vorab bestimmt und anschließend werden die Blechlamellen entsprechend gefertigt und montiert, so dass der vorab festgelegte Versatz erreicht wird.

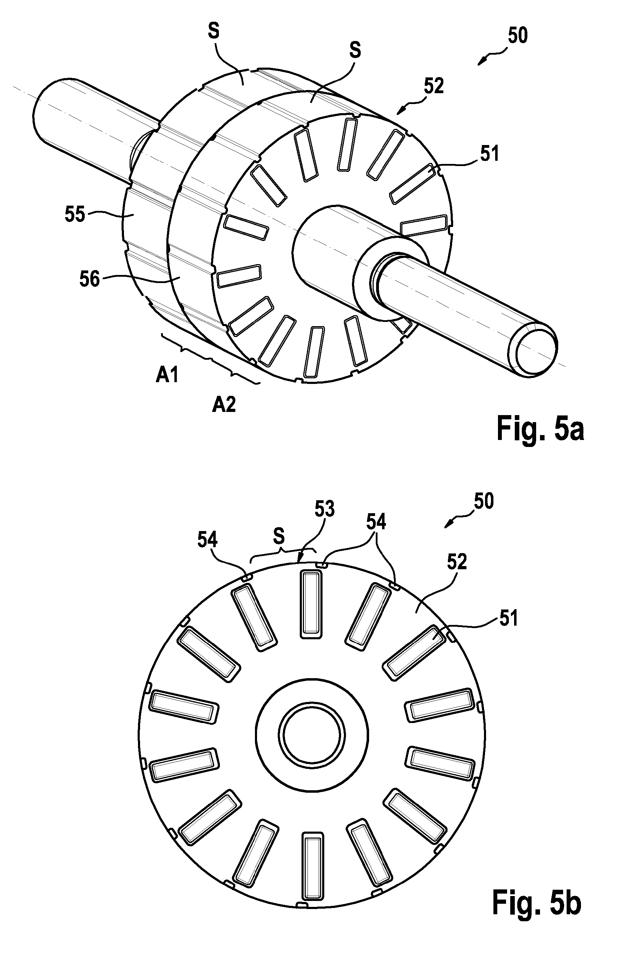

In den Figuren 5a und 5b ist eine weitere Ausführungsform eines Rotors 50 zur Verwendung in einer Synchronmaschine 1 gemäß Figur 1 dargestellt. Anstelle einer Polkontur mit einer Struktur, die durch einen variablen Abstand von der Drehachse definiert ist, wie z.B. bei einem Sinuspol bzw. einer Richterkontur, kann eine Polkontur 53 des Rotors 50 im Wesentlichen größtenteils durch ein Segment S der Mantelfläche des kreiszylinderförmigen Rotors 50 gebildet sein. Die Rotorpole 52 werden bei dieser Ausführungsform durch speichenförmig angeordnete Taschen 51 definiert, wobei die Polkontur 53 an mindestens einem ihrer Ränder in Umfangsrichtung mit Vertiefungen 54 versehen ist, die Luftspalte zwischen den Segmenten S der Mantelfläche bilden. So werden im Wesentlichen Polkonturen 53 gebildet, die seitlich durch Luftspalte begrenzt sind, um voneinander getrennte mantelsegmentförmige Polkonturen zu bilden.

Die mantelsegmentförmigen Polkonturen 52 werden, wie bei den Ausführungsformen der Figuren 2 bis 4, versetzt zur Mittenachse der Rotorpole angeordnet und es werden zwei Rotorteile 55, 56 in zwei Abschnitten A1,A2 des Rotors 50 in axialer Richtung vorgesehen, in denen die Polkonturen 52 in zueinander entgegengesetzten Umfangsrichtungen bezüglich der Mittenachse M versetzt angeordnet sind.

Auch bei der Ausführungsform der Figuren 5a und 5b kann der Rotor 50 aus Blechlamellen mit einem einzigen Blechschnitt aufgebaut werden, wobei die beiden Teilpakete durch Stapeln der Blechlamellen aufgebaut werden. Anschließend kann durch spiegelbildliches Aufeinandersetzen ein entsprechender Versatz der Polkonturen in zueinander entgegengesetzten Umfangsrichtungen erreicht werden, während die speichenförmig angeordneten Taschen 51 im wesentlichen durchgängig ohne Stufen ausgebildet sind, um quaderförmige Permanentmagnete aufzunehmen.

Bei dem Rotor 50 wird infolge der Vertiefungen 54 zwischen den einzelnen Rotorpolen 52 das Rastmoment reduziert. Ferner hat die Vertiefung zwischen den Rotorpolen den weiteren Vorteil, dass infolge der dadurch entstehenden Materialreduzierung oberhalb (in radialer Richtung nach außen) der Permanentmagneten der Streufluss reduziert und dadurch der Wirkungsgrad der elektrischen Maschine verbessert wird. Auch bei dieser Ausführungsform kann der Rotor 50 durch Stapeln von Blechlamellen gleicher Blechgeometrie hergestellt werden.

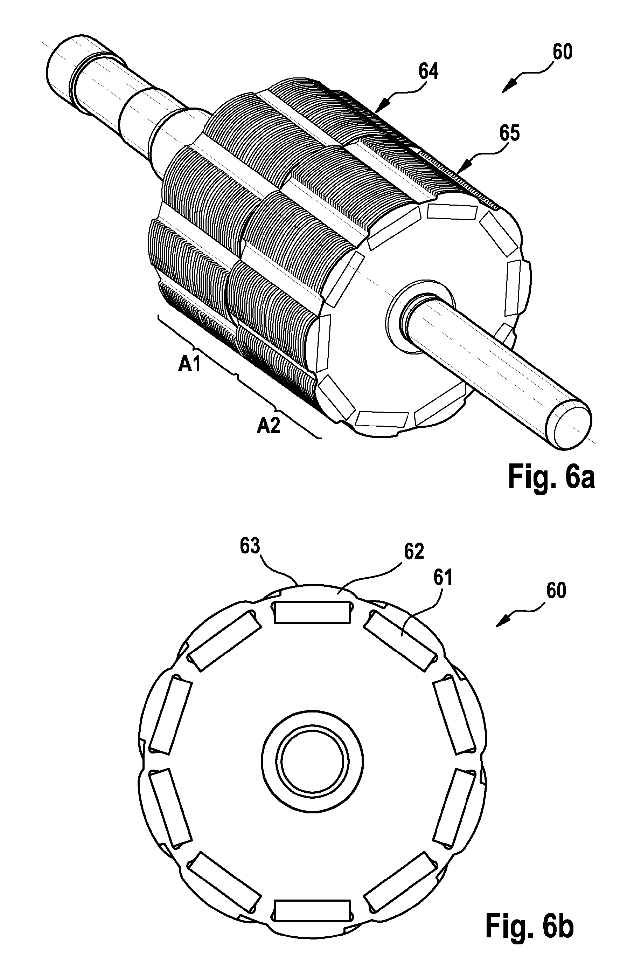

In den Figuren 6a und 6b ist eine weitere Ausführungsform eines Rotors 60 zum Einsatz in eine Synchronmaschine 1 gemäß Figur 1 dargestellt. Bei der Ausführungsform der Figuren 6a und 6b handelt es sich im Wesentlichen um einen ähnlichen Aufbau wie beim Rotor 20 der Figuren 2a bis 2c. Der Rotor 60 weist also zwei Rotorteile 64, 65 in zwei Abschnitten A1, A2 auf, die in axialer Richtung aufeinander angeordnet sind, wobei ein Seitenbereich von Polkonturen 63 von Rotorpolen 62 in Umfangsrichtung eine Strukturierung aufweist, die von der Richterkontur bzw. der Polkontur zur Ausbildung eines Sinuspols abweicht. Weiterhin weist der Rotor 60 Taschen 61 zur Aufnahme von Permanentmagneten auf, die die Rotorpole 62 ausbilden.

Im gezeigten Ausführungsbeispiel weisen die Polkonturen 63 der Rotorpole 62 jeweils eine Stufung auf, so dass der Luftspalt, der den geformten Bereich der Polkontur 63 von der benachbarten Polkontur 63 trennt, vergrößert wird. Anstelle der Stufung kann auch eine Schrägung (Schränkung) oder eine sonstige Abweichung von der ansonsten in einer radialen Richtung symmetrischen Polkontur vorgesehen sein. Der Bereich, in dem die Abweichung von der symmetrischen Polkontur vorgesehen wird, kann im Bereich von 1% - 20% der Gesamtbreite in Umfangsrichtung liegen. Vorzugsweise ist der Bereich, in dem die Abweichung von der symmetrischen Polkontur 63 vorgesehen wird, an der Seite der Polkontur eines Abschnittes vorgesehen, über die der dem gleichen Rotorpol 62 zugeordnete Bereich der Polkontur 63 eines weiteren Rotorteils in Umfangsrichtung übersteht.

Anstelle einer Stufung kann auch eine Abflachung, eine Abrundung oder ein stetiger Auslauf der Polkontur vorgesehen werden, wodurch die Polkontur von der herkömmlichen Richterkontur oder der angenäherten Richterkontur abweicht.

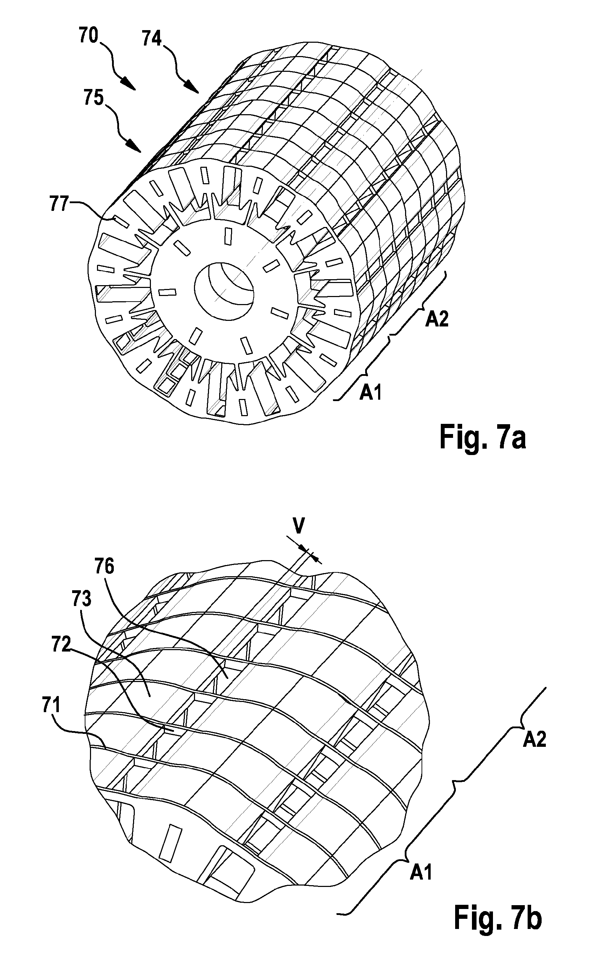

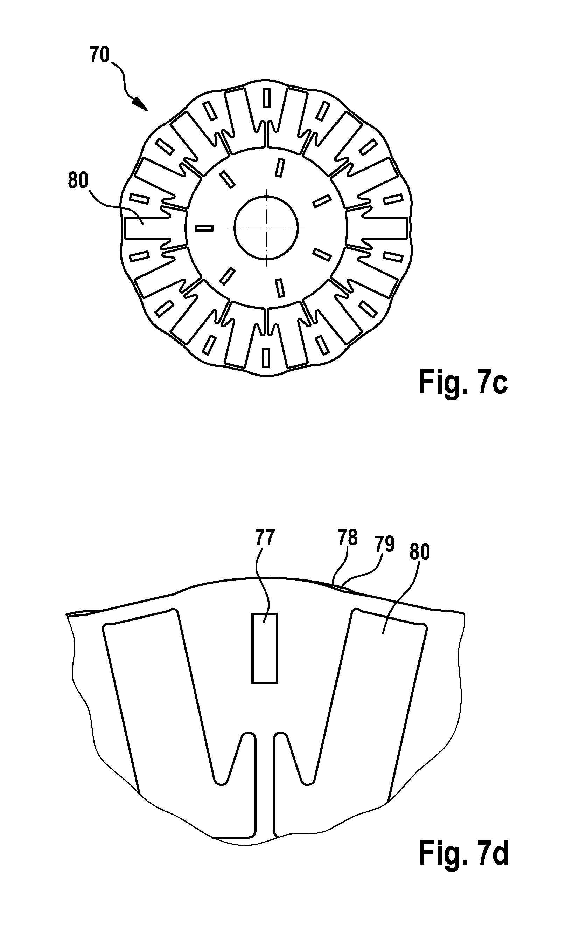

In den Figuren 7a bis 7d ist eine weitere Ausführungsform eines Rotors 70 zum Einsatz in eine Synchronmaschine 1 gemäß Figur 1 dargestellt. Bei der Ausführungsform der Figuren 7a bis 7d handelt es sich im Wesentlichen um einen ähnlichen Aufbau wie beim Rotor 30 der Figuren 3a bis 3c. Der Rotor 70 weist also zwei Rotorteile 74, 75 in zwei Abschnitten A1, A2, die in axialer Richtung aufeinander angeordnet sind. Die Abschnitte A1, A2 weisen Polkonturen auf, die um den Versatzwinkel V zueinander versetzt sind.

Die Rotorteile 74, 75 sind wie zuvor beschrieben durch Stapeln von Blechlamellen aufgebaut. Die einzelnen Blechlamellen können, bevor sie auf eine Welle gefügt werden, zu dem Blechpaket des Rotors 70 verbaut werden oder sie können als Einzellamellen oder Teilpaket auf eine entsprechende Welle gefügt und dabei zu dem Blechpaket vereint werden.

Der Rotor 70 weist Taschen 80 auf, in die Permanentmagnete eingefügt werden können. Beim Rotor 70 sind die Taschen 80 wie bei der Ausführungsform der Figuren 3a bis 3c speichenförmig angeordnet, d. h. sie erstrecken sich in radialer Richtung von dem Rotor 70. Permanentmagnete können in die Taschen 80 eingesetzt werden, bevor die Blechlamelle auf die Welle gefügt wird oder anschließend.

Im Unterschied zur Ausführungsform der Figuren 3a bis 3c werden Blechlamellen mit verschiedenen Blechschnitten vorgesehen. Erste Blechlamellen 71 weisen zwischen den Bereichen, die die Pole ausbilden sollen, Stege 72 auf. Zweite Blechlamellen 73 unterscheiden sich von den ersten Blechlamellen, indem diese diese Stege 72 nicht aufweisen, so dass zwischen den Bereichen, die die Pole ausbilden sollen, eine Lücke besteht. Werden die Blechlamellen aufeinander gestapelt so bilden sich in radialer Richtung nach außen oberhalb der Taschen 80 eine oder mehrere Ausnehmungen 76, die durch die Lücken gebildet werden. Die Ausnehmungen 76 dienen dazu, den magnetischen Streufluss des Rotors 70 zwischen den Polen zu reduzieren, um den Wirkungsgrad der elektrischen Maschine zu erhöhen.

Der Rotor 70 wird daher so aufgebaut, dass erste Blechlamellen 71 und zweite Blechlamellen 73 in geeigneter Weise aufeinander gestapelt werden. Durch geeigneten Aufbau des Rotors 70 kann eine Struktur, wie sie beispielsweise in Figur 7b detailliert gezeigt ist, geschaffen werden. Dort werden Stapel mehrerer zweiten Blechlamellen 73 durch jeweils eine erste Blechlamelle 71 voneinander getrennt, um so möglichst große Ausnehmungen 76 bei guter mechanischer Stabilität zu schaffen.

Weiterhin können zur Fixierung der einzelnen Blechlamellen miteinander Stanznoppen 77 vorgesehen sein, die zwischen den Taschen 80 vorgesehen sind und die einzelnen Blechlamellen 71, 73 zusammenhalten. Ein Lamellenpaket mit Stanznoppen 77 wird im Regelfall durch Stanzpaketieren hergestellt.

Die Taschen 80 zur Aufnahme der Permanentmagnete sind an ihrem zur Welle gerichteten Ende verbreitert, um einen magnetischen Kurzschluss über das Innere des Rotors 70 zu vermeiden. Die Maßnahme dient also zum Führen des magnetischen Feldes in Richtung zur außen liegenden Polkontur.

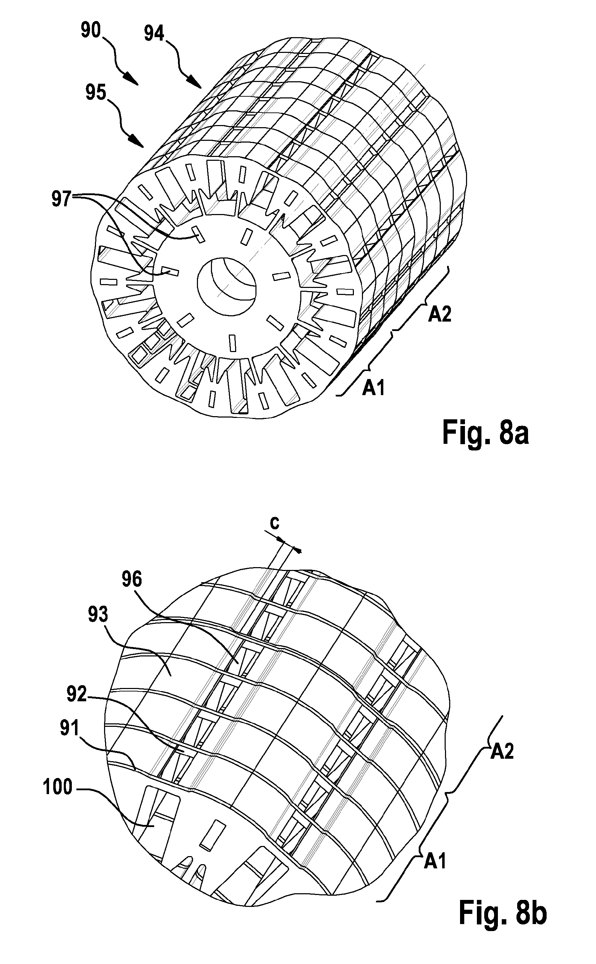

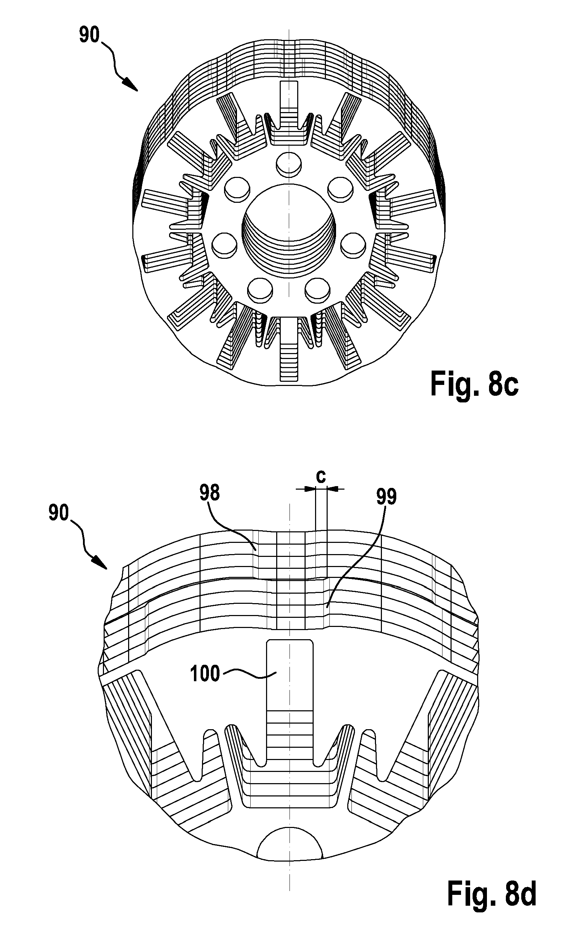

In den Figuren 8a bis 8d ist eine weitere Ausführungsform eines Rotors 90 zum Einsatz in eine Synchronmaschine 1 gemäß Figur 1 dargestellt. Bei der Ausführungsform der Figuren 8a bis 8d handelt es sich im Wesentlichen um einen ähnlichen Aufbau wie beim Rotor 70 der Figuren 7a bis 7d mit zwei Rotorteilen 94, 95 in zwei Abschnitten A1, A2. Der Rotor 90 weist also zwei Rotorteile 94 und 95 in zwei Abschnitten A1 und A2 auf, die in axialer Richtung durch Stapeln von ersten Blechlamellen 91 und zweiten Blechlamellen 93, deren Formen den Blechlamellen 71, 73 der Ausführungsform der Figuren 7a bis 7d entsprechen, gebildet sind. In dem Rotor 90 sind Taschen 100 vorgesehen, die zur Aufnahme von Permanentmagneten in Speichenanordnung dienen.

Durch das Stapeln der Blechlamellen 91, 93 werden wie oben beschrieben Ausnehmungen 96 definiert. Die Polkontur weist eine Sinuskontur auf, die um einen Wert c mit einer Stufe abgesetzt ist, wie es in Bezug auf die Ausführungsform der Figuren 6a und 6b beschrieben ist. Ein Seitenbereich der Polkonturen weist in Umfangsrichtung eine Strukturierung auf, die von der Richterkontur bzw. der Polkontur zur Ausbildung eines Sinuspols abweicht.

Im gezeigten Ausführungsbeispiel weisen die Polkonturen der Rotorpole jeweils eine Stufung 98, 99 auf, so dass der Luftspalt, der den geformten Bereich der Polkontur von der benachbarten Polkontur trennt, vergrößert wird. Anstelle der Stufung 98, 99 kann auch eine Schrägung oder eine sonstige Abweichung von der ansonsten in einer radialen Richtung symmetrischen Polkontur vorgesehen sein.

Der Bereich, in dem die Abweichung von der symmetrischen Polkontur vorgesehen wird, kann eine Breite c aufweisen bezogen auf den Rand der Polkontur eines entsprechend benachbarten Abschnitts A1, A2. Die Breite c kann ca 1% - 20% der Gesamtbreite in Umfangsrichtung entsprechen. Vorzugsweise ist der Bereich, in dem die Abweichung von der symmetrischen Polkontur vorgesehen wird, an der Seite der Polkontur eines Abschnittes vorgesehen, über die der dem gleichen Rotorpol zugeordnete Bereich der Polkontur eines weiteren Rotorteils in Umfangsrichtung übersteht.

## Patentansprüche

1. Maschinenkomponente (20; 30; 40; 50; 60; 70; 90), insbesondere ein Rotor, zum Aufbau einer elektrischen Maschine,
wobei die Maschinenkomponente (20; 30; 40; 50; 60; 70; 90) im Wesentlichen kreiszylindrisch ist und Pole (22, 32; 46; 52; 62) aufweist, an denen ein von mindestens einem Permanentmagneten gebildetes Magnetfeld austritt,
wobei die Pole (22, 32; 46; 52; 62) jeweils mit einer Polkontur (23; 33; 45; 53; 63) versehen sind, die von einer rein kreiszylindrischen Mantelfläche der Maschinenkomponente (20; 30; 40; 50; 60; 70; 90) abweicht,
wobei die Polkonturen (23; 33; 45; 53; 63) der Pole (22, 32; 46; 52; 62) in axialer Richtung über die Länge der Maschinenkomponente (20; 30; 40; 50; 60; 70; 90) jeweils mehrere Abschnitte aufweisen, die in Umfangsrichtung versetzt sind,
wobei der mindestens eine Permanentmagnet im Wesentlichen zylindrisch, insbesondere quaderförmig, ausgebildet ist und sich über mindestens einen Übergang zwischen zwei der mehreren Abschnitte (A1, A2, A3) erstreckt,
wobei die Polkonturen eine Richterkontur oder eine Polkontur zur Ausbildung eines Sinuspols aufweisen, wobei die Polkontur (23; 33; 45; 63) nicht klappsymmetrisch in der Umfangsrichtung ausgebildet ist, wobei ein Seitenbereich der Polkonturen in Umfangsrichtung eine Strukturierung aufweist, die von der Richterkontur bzw. der Polkontur zur Ausbildung eines Sinuspols abweicht, insbesondere mit einer einseitigen Stufung oder Schrägung.

2. Maschinenkomponente (20; 30; 40; 50; 60; 70; 90) nach Anspruch 1, wobei der Permanentmagnet in einer Tasche (21; 31; 41; 51; 61; 80; 100) angeordnet ist, die sich über einen Übergang zwischen mindestens zwei der mehreren Abschnitte (A1, A2, A3) erstreckt und keine Stufung aufweist.

3. Maschinenkomponente (20; 30; 40; 50; 60; 70; 90) nach Anspruch 1 oder 2, wobei der mindestens eine Permanentmagnet so angeordnet ist, dass dessen Polrichtung in radialer oder tangentialer Richtung verläuft.

4. Maschinenkomponente (20; 30; 40; 50; 60) nach einem der Ansprüche 1 bis 3, wobei zwischen zwei benachbarten Polkonturen ein Luftspalt vorgesehen ist, der eine Breite in Umfangsrichtung aufweist, die gleich oder größer ist als der größte vorkommende Versatz zwischen zwei einem bestimmten Pol (22, 32; 46; 52; 62) zugeordneten Polkonturen (23; 33; 45; 53; 63).

5. Maschinenkomponente (20; 30; 40; 50; 60; 70,90) nach einem der Ansprüche 1 bis 4, wobei die Maschinenkomponente (20; 30; 40; 50; 60; 70,90) mit Blechlamellen aufgebaut ist, deren Bereiche, die die Polkonturen bilden, zu einer Mittenachse des Pols (22, 32; 46; 52; 62) in Umfangsrichtung versetzt sind, wobei der bzw. die den mindestens einen Permanentmagneten tragenden Bereiche symmetrisch zu der Mittenachse angeordnet ist/sind, wobei mindestens zwei durch Stapeln der Blechlamellen aufgebaute Komponententeile vorgesehen sind, die spiegelbildlich aufeinander aufgesetzt sind, so dass sich der mindestens eine Permanentmagnet über einen Übergang zwischen den zwei Komponententeilen erstreckt.

6. Maschinenkomponente (70; 90) nach einem der Ansprüche 1 bis 5, wobei benachbarte Pole über voneinander beabstandete Stege miteinander verbunden sind.

7. Elektrische Maschine mit einer Maschinenkomponente (20; 30; 40; 50; 60) nach einem der Ansprüche 1 bis 6.

## Claims

1. Machine component (20; 30; 40; 50; 60; 70; 90), in particular a rotor, for constructing an electrical machine, wherein the machine component (20; 30; 40; 50; 60; 70; 90) is substantially circular-cylindrical and has poles (22, 32; 46; 52; 62) at which a magnetic field, which is formed by at least one permanent magnet, exits, wherein the poles (22, 32; 46; 52; 62) are each provided with a pole contour (23; 33; 45; 53; 63) which differs from a purely circular-cylindrical casing surface of the machine component (20; 30; 40; 50; 60; 70; 90), wherein the pole contours (23; 33; 45; 53; 63) of the poles (22, 32; 46; 52; 62) each have a plurality of sections, which are offset in the circumferential direction, over the length of the machine component (20; 30; 40; 50; 60; 70; 90) in the axial direction, wherein the at least one permanent magnet is of substantially cylindrical, in particular cuboidal, design and extends over at least one transition between two of the plurality of sections (A1, A2, A3), wherein the pole contours have a Richter contour or a pole contour for forming a sinusoidal pole, wherein the pole contour (23; 33; 45; 63) is not designed to exhibit folding symmetry in the circumferential direction, wherein a side region of the pole contours has, in the circumferential direction, a patterning which differs from the Richter contour or the pole contour for forming a sinusoidal pole, in particular with a gradation or slope on one side.

2. Machine component (20; 30; 40; 50; 60; 70; 90) according to Claim 1, wherein the permanent magnet is arranged in a pocket (21; 31; 41; 51; 61; 80; 100) which extends over a transition between at least two of the plurality of sections (A1, A2, A3) and does not have a gradation.

3. Machine component (20; 30; 40; 50; 60; 70; 90) according to Claim 1 or 2, wherein the at least one permanent magnet is arranged such that the pole direction of the said permanent magnet runs in the radial or tangential direction.

4. Machine component (20; 30; 40; 50; 60) according to one of Claims 1 to 3, wherein an air gap is provided between two adjacent pole contours, the said air gap having a width in the circumferential direction which is equal to or greater than the largest occurring offset between two pole contours (23; 33; 45; 53; 63) which are associated with a particular pole (22, 32; 46; 52; 62).

5. Machine component (20; 30; 40; 50; 60; 70, 90) according to one of Claims 1 to 4, wherein the machine component (20; 30; 40; 50; 60; 70, 90) is constructed with sheet-metal laminations, the regions of the said sheet-metal laminations which form the pole contours being offset in the circumferential direction in relation to a centre axis of the pole (22, 32; 46; 52; 62), wherein the region or regions which is/are fitted with the at least one permanent magnet is/are arranged symmetrically in relation to the centre axis, wherein at least two component parts, which are constructed by stacking the sheet-metal laminations, are provided, the said component parts being mounted one on the other in a mirror-inverted manner, so that the at least one permanent magnet extends over a transition between the two component parts.

6. Machine component (70; 90) according to one of Claims 1 to 5, wherein adjacent poles are connected to one another by means of webs which are spaced apart from one another.

7. Electrical machine comprising a machine component (20; 30; 40; 50; 60) according to one of Claims 1 to 6.

## Revendications

1. Composant de machine (20 ; 30 ; 40 ; 50 ; 60 ; 70 ; 90), en particulier rotor, pour la construction d'une machine électrique, le composant de machine (20 ; 30 ; 40 ; 50 ; 60 ; 70 ; 90) étant essentiellement cylindrique circulaire et présentant des pôles (22, 32 ; 46 ; 52 ; 62) au niveau desquels sort un champ magnétique formé par au moins un aimant permanent, les pôles (22, 32 ; 46 ; 52 ; 62) étant chacun pourvus d'un contour de pôle (23 ; 33 ; 45 ; 53 ; 63) qui s'écarte d'une surface d'enveloppe purement cylindrique circulaire du composant de machine (20 ; 30 ; 40 ; 50 ; 60 ; 70 ; 90), les contours de pôle (23 ; 33 ; 45 ; 53 ; 63) des pôles (22, 32 ; 46 ; 52 ; 62) présentant à chaque fois plusieurs portions dans la direction axiale sur la longueur du composant de machine (20 ; 30 ; 40 ; 50 ; 60 ; 70 ; 90) qui sont décalées dans la direction périphérique, l'au moins un aimant permanent étant réalisé essentiellement sous forme cylindrique, en particulier quadrilatérale, et s'étendant sur au moins une transition entre deux de la pluralité de portions (A1, A2, A3),
les contours de pôle présentant un contour de redresseur ou un contour de pôle pour réaliser un pôle sinusoïdal, le contour de pôle (23 ; 33 ; 45 ; 63) n'étant pas réalisé suivant une symétrie par rabattement dans la direction périphérique, une région latérale des contours de pôle présentant, dans la direction périphérique, une structuration qui s'écarte du contour de redresseur ou du contour de pôle pour réaliser un pôle sinusoïdal, en particulier avec un étagement ou un biseautage unilatéral.

2. Composant de machine (20 ; 30 ; 40 ; 50 ; 60 ; 70 ; 90) selon la revendication 1, dans lequel l'aimant permanent est disposé dans une cavité (21 ; 31 ; 41 ; 51 ; 61 ; 80 ; 100) qui s'étend sur une transition entre au moins deux de la pluralité de portions (A1, A2, A3) et qui ne présente aucun étagement.

3. Composant de machine (20 ; 30 ; 40 ; 50 ; 60 ; 70 ; 90) selon la revendication 1 ou 2, dans lequel l'au moins un aimant permanent est disposé de telle sorte que son sens de polarité s'étende dans la direction radiale ou tangentielle.

4. Composant de machine (20 ; 30 ; 40 ; 50 ; 60) selon l'une quelconque des revendications 1 à 3, dans lequel, entre deux contours de pôle adjacents, est prévu un entrefer qui présente une largeur dans la direction périphérique qui est supérieure ou égale au décalage maximal se produisant entre deux contours de pôle (23 ; 33 ; 45 ; 53 ; 63) associés à un pôle déterminé (22, 32 ; 46 ; 52 ; 62).

5. Composant de machine (20 ; 30 ; 40 ; 50 ; 60 ; 70, 90) selon l'une quelconque des revendications 1 à 4, dans lequel le composant de machine (20 ; 30 ; 40 ; 50 ; 60 ; 70, 90) est construit avec des lamelles en tôle dont les régions qui forment les contours de pôle sont décalées dans la direction périphérique par rapport à un axe médian du pôle (22, 32 ; 46 ; 52 ; 62), la ou les régions portant l'au moins un aimant permanent étant disposée(s) symétriquement par rapport à l'axe médian, au moins deux parties de composant construites par empilement des lamelles en tôle étant prévues, lesquelles sont placées l'une sur l'autre suivant une symétrie en miroir de telle sorte que l'au moins un aimant permanent s'étende sur une transition entre les deux parties de composant.

6. Composant de machine (70 ; 90) selon l'une quelconque des revendications 1 à 5, dans lequel des pôles adjacents sont connectés les uns aux autres par le biais de nervures espacées les unes des autres.

7. Machine électrique comprenant un composant de machine (20 ; 30 ; 40 ; 50 ; 60) selon l'une quelconque des revendications 1 à 6.
